# EUROPEAN PATENT APPLICATION

(11) **EP 3 674 241 A1**
(43) Date of publication of application: **01.07.2020**
(21) Application number: 19187125.0
(22) Date of filing: 18.07.2019
(51) Int. Cl.: B66B 5/00, B66B 3/00

(54) **NOTIFICATION OF OBJECTS IN ELEVATOR SYSTEM**

(30) Priority: 18.07.2018 IN 201811026897
(71) Applicant: Otis Elevator Company, Farmington, Connecticut 06032 (US)
(72) Inventor: AMUDURI, Santhosh, 500081 Telangana (IN); LINGALA, Ramesh, 500081 Telangana (IN)
(74) Representative: Dehns

(57) **Abstract**

A method for notifying a passenger of an object left in an elevator car (103), the method including determining if the passenger is authorized to access an object tracking service; when the passenger is authorized to access the object tracking service, using an imaging device (202¹, 202²) to match the passenger to an object; determining that the passenger has exited the elevator car (103); and when the passenger has exited the elevator car (103) without taking the object, generating a notification.

## Description

### BACKGROUND

The embodiments disclosed herein relate generally to elevator systems, and more particularly, to an elevator system that notifies passengers of forgotten objects in an elevator car. Passengers using elevator systems may travel with objects, such as luggage, a briefcase, a handbag, etc. Passengers occasionally exit the elevator car without their object(s).

### SUMMARY

According to an embodiment, a method for notifying a passenger of an object left in an elevator car, includes determining if the passenger is authorized to access an object tracking service; when the passenger is authorized to access the object tracking service, using an imaging device to match the passenger to an object; determining that the passenger has exited the elevator car; and when the passenger has exited the elevator car without taking the object, generating a notification.

In addition to one or more of the features described herein, further embodiments may include wherein determining if the passenger is authorized to access the object tracking service comprises detecting a credential.

In addition to one or more of the features described herein, or as an alternative, further embodiments may include wherein determining if the passenger is authorized to access the object tracking service comprises verifying the credential.

In addition to one or more of the features described herein, or as an alternative, further embodiments may include wherein matching the passenger to the object comprises processing images of the passenger and the object.

In addition to one or more of the features described herein, or as an alternative, further embodiments may include wherein determining that the passenger has exited the elevator car comprises processing images of the passenger.

In addition to one or more of the features described herein, or as an alternative, further embodiments may include wherein determining the passenger has exited the elevator car without taking the object comprises processing images of the inside of the elevator car.

According to another embodiment, a notification system includes a controller configured to perform operations including: determining if a passenger is authorized to access an object tracking service; when the passenger is authorized to access the object tracking service, using the imaging device to match the passenger to an object; determining that the passenger has exited an elevator car; and when the passenger has exited the elevator car without taking the object, generating a notification.

In addition to one or more of the features described herein, further embodiments may include a system wherein determining if the passenger is authorized to access the object tracking service comprises detecting a passenger credential.

In addition to one or more of the features described herein, or as an alternative, further embodiments may include a system wherein determining if the passenger is authorized to access the object tracking service comprises the controller verifying the credential.

In addition to one or more of the features described herein, or as an alternative, further embodiments may include a system further comprising a fixture, the fixture detecting the presence of the credential.

In addition to one or more of the features described herein, or as an alternative, further embodiments may include a system wherein the fixture is located outside the elevator car or inside the elevator car.

In addition to one or more of the features described herein, or as an alternative, further embodiments may include a system wherein the imaging device is located outside the elevator car or inside the elevator car.

In addition to one or more of the features described herein, or as an alternative, further embodiments may include a system wherein matching the passenger to the object comprises processing images of the passenger and the object.

In addition to one or more of the features described herein, or as an alternative, further embodiments may include a system wherein determining that the passenger has exited the elevator car comprises processing images of the passenger.

In addition to one or more of the features described herein, or as an alternative, further embodiments may include a system wherein determining the passenger has exited the elevator car without taking the object comprises processing images of the inside of the elevator car.

According to another embodiment, a method for notifying a user of an object left in an area includes determining if the user is authorized to access an object tracking service; when the user is authorized to access the object tracking service, using an imaging device to match the user to an object; determining that the user has exited the area; and when the user has exited the area without taking the object, generating a notification.

Technical effects of embodiments of the present disclosure include a system and method to detect when a passenger has left an object in an elevator car and to send a notification to the passenger that the object was left in the elevator car.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system in an example embodiment;
FIG. 2 depicts components of a notification system in an example embodiment;
FIG. 3 is a flow diagram of a process for notifying a passenger of a forgotten object in an example embodiment; and
FIG. 4 illustrates the process for notifying a passenger of a forgotten object in an example embodiment.

### DETAILED DESCRIPTION

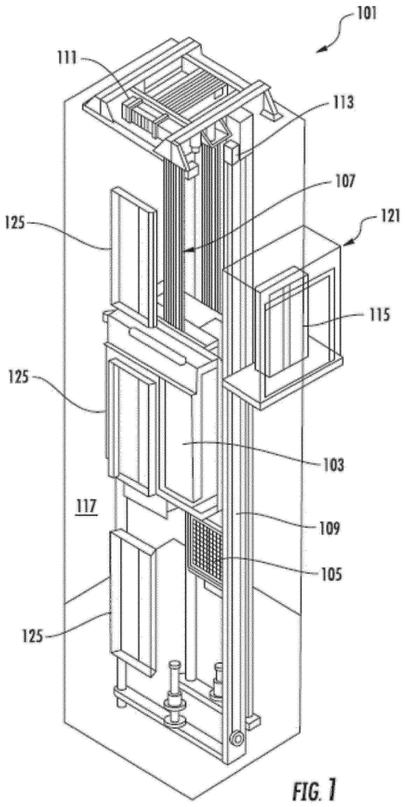

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

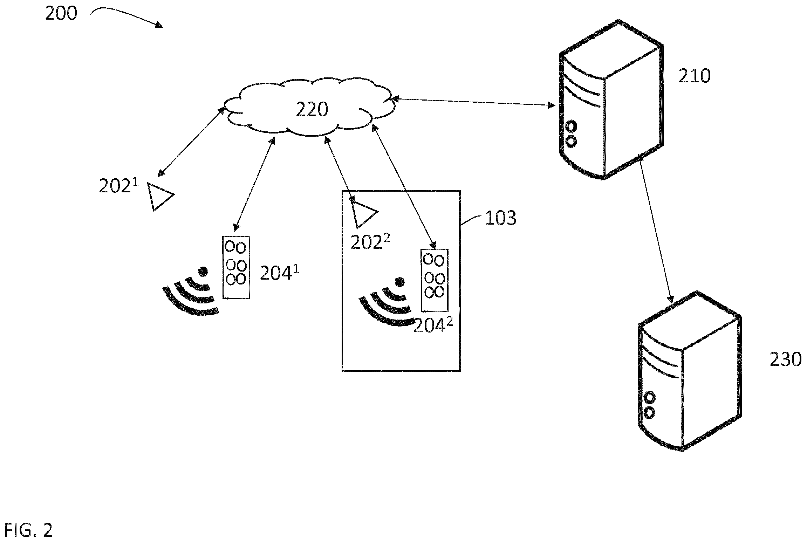

FIG. 2 depicts components of an example notification system 200 that may be used in conjunction with the elevator system 101. The notification system 200 sends a passenger (and optionally others) a notification of an object left in an elevator car 103. The notification system 200 includes one or more imaging devices 202. A first imaging device 202¹ may image an area in front of elevator car doors, such as a landing area. A second imaging device 202² may image an area within the inside of the elevator car 103. The imaging devices 202 may be visible light cameras, but may produce images in different wavelengths (e.g., mm wave). In other embodiments, the imaging devices 202 use image analytics to match a passenger to an object and store that information in database for that passenger.

The notification system 200 includes one or more fixtures 204 that wirelessly detect a passenger credential. A first fixture 204¹ may be an elevator operating panel in a lobby or at a landing. A second fixture 204² may be located within the elevator car 103 in the form of an elevator car operating panel. Fixtures 204 may also take the form of light fixtures, speakers, display screens, etc. The fixtures 204 use wireless communications to detect a passenger credential, as described in further detail herein. The wireless communications with the fixtures 204 may be implemented using known protocols, such a NFC, Bluetooth, BTLE, ZigBee, LoRa, WAN and any wired/wireless communication channel, etc.

The passenger credential may also be implemented using facial recognition based on images acquired by imaging devices 202. For example, when a person checks in at a hotel, an image of their face may be captured and stored on controller 210. The user's face can then be used as the credential authorizing access to an object tracking service as described herein.

The imaging devices 202 and the fixtures 204 communicate with a controller 210 over a network 220. The network 220 may be implemented using known wired and/or wireless networking systems. The controller 210 may be implemented using a processor-based device, such as a server. The controller 210 includes typical computer-hardware such as a processor, memory and communication unit. The controller 210 performs several operations, including authenticating that a passenger is authorized to take advantage of the object notification feature, detecting a forgotten object, and initiating notification to the passenger of the forgotten object.

A message server 230 is in communication with the controller 210. The message server 230 may transmit a message to a passenger upon detection of a forgotten object associated with that passenger. The message server 230 may be a stand-alone device, or may be implemented as part of the controller 210. The message server 230 generates communications with a passenger using one or more communications protocols, including one or more of SMS, Bluetooth, cellular, email, paging, etc.

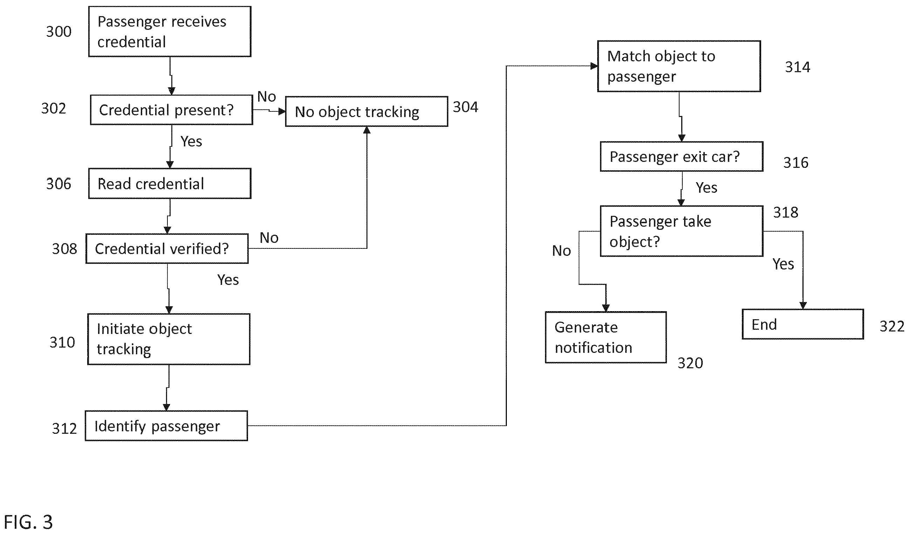

FIG. 3 is a flow diagram of a process for notifying a passenger of a forgotten object in an example embodiment. The process of FIG. 3 may be performed for each of multiple passengers. The process begins at 300 where a passenger receives a credential that authorizes the passenger to take advantage of the forgotten object service. In an example, the passenger is a hotel guest and the passenger receives the credential as part of checking into the hotel. The credential may be physical (e.g., a room key) or the credential may be electronic (e.g., a digital credential that is stored on a mobile device of the passenger). In other embodiments, an image of the user's face is obtained so that the user's face serves as the credential. The credential is associated with that individual passenger and is associated with a passenger profile stored in controller 210. The passenger profile may identify the passenger name, room, number, mobile phone number, access to object tracking service, etc. It is understood that embodiments may be used in environments other than a hotel, such as educational institutions, medical facilities, etc.

At 302, the passenger arrives at the elevator area. If at 302, no credential is present (e.g., the passenger does not have a credential or it is not with them), then flow proceeds to 304, where no object tracking is provided. If the credential is implemented by facial recognition, then step 302 may be skipped

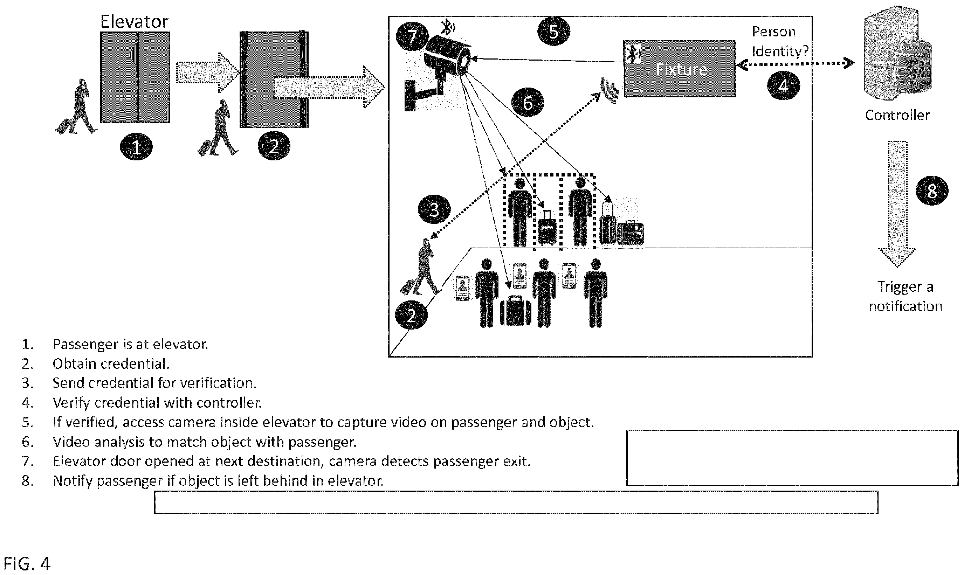

If a credential is present, at 306 either fixture 204¹ outside the elevator car 103 or fixture 204² inside the elevator car 103 reads the credential. If facial recognition is used as the credential, one of imaging device 202¹ outside the elevator car 103 or imaging device 202² inside the elevator car 103 acquires an image of the passenger's face. These operations are depicted diagrammatically in FIG. 4 as operations 1-3.

At 308, the credential is verified with controller 210. Controller 210 accesses the passenger profile associated with credential and determines if the passenger is authorized to access the object tracking service. This operation is depicted diagrammatically in FIG. 4 as operation 4. If the passenger is not authorized to access the object tracking service, flow proceeds to 304 and no object tracking is performed.

If at 308 the passenger credential indicates that this passenger is authorized to access the object tracking service, then flow proceeds to 310 where the object tracking service is initiated. At this stage, the controller 210 sends a command to the imaging devices 204 to acquire images of the passenger. This operation is depicted diagrammatically in FIG. 4 as operation 5. The images may be from the imaging device 202¹ outside the elevator car 103 or from the imaging device 202² inside the elevator car 103, if the passenger has boarded the elevator car 103. The images are transmitted to the controller 210. A first step of the object tracking is to identify the passenger at 312. The passenger may be identified by the credential assigned to that passenger. The passenger may also be identified using facial recognition by comparing images from the image devices 204 to a picture of the passenger stored in the passenger profile associated with the credential. The passenger may also be identified by an identification card photo or room number on a key card.

The next step of the object tracking is to match an object with a particular passenger at 314. It is understood that multiple objects (e.g., a set of luggage) may be matched with a passenger. The disclosure refers to a single object for ease of description. This operation is depicted diagrammatically in FIG. 4 as operation 6. This may be done in a variety of manners. First, the controller may analyze images from the imaging device within the elevator car 103 and detect when a new passenger and new object are detected. If only a single passenger boards the elevator car 103, then any new object (e.g., luggage, a purse, backpack, etc.) will be associated with that new passenger. Another technique to match an object with a passenger is monitor proximity of a passenger to an object. Typically, passengers keep their belongings close to themselves and will board with their objects and set the objects next to them. The controller 210 performs video analysis to match an object to a passenger based on proximity of the object to the passenger, including when in transit boarding the elevator car 103. This is helpful when multiple passengers board the elevator car 103 simultaneously. In other embodiments, the imaging devices 202 use mm wave technology to detect the distance between the object and the passenger. For example, if a distance between a passenger and object is less than a threshold limit distance, then it is determined that the object belongs to the passenger.

At 316, the controller 210 then monitors the images from image device 202² to determine when a passenger exits the elevator car 103. This operation is depicted diagrammatically in FIG. 4 as operation 7. Detecting a passenger exiting the elevator car 103 may be performed by comparing successive images (taken in real time or near real time) to detect the absence of a passenger that was previously present. The detection of a passenger exiting the car may also be facilitated using destination information from the controller 115. For example, if someone has selected floor 16 as a destination, then the controller 210 can assume that at least one passenger will exit at floor 16.

Once a passenger exits the elevator car 103, flow proceeds to 318 where the controller 210 determines if the passenger has taken their object. As noted above, each passenger is matched to an object. If a passenger exits the elevator car 103 without the matched object(s), then flow proceeds to 320. At 320 the controller 210 instructs the message server 230 to send a notification to the passenger stating that they left an object in the elevator car 103. This operation is depicted diagrammatically in FIG. 4 as operation 8. The notification may be presented on a display within, or outside, the elevator car 103. The notification may be sent to a phone number stored in the passenger profile which was created upon receiving the credential. The notification may also be forwarded to a third party, such a hotel security. The notification sent at 320 may be transmitted immediately when elevator door closes (e.g., via Bluetooth) so that passenger is notified immediately when exiting the elevator car. If the passenger takes the object upon exit, then the process is terminated at 322.

The notification at 320 may also include an audible or visual notification to the passenger, either in the elevator car 103 or at the landing outside the elevator car 103 as the passenger exits the elevator car 103. Such a notification may be generated at fixtures 204 or other devices capable of producing sound or images (e.g., a kiosk, intercom, etc.).

It should be noted that the process of Figure 3 may be used to detect when a passenger boards an elevator car but has left one or more objects on the elevator landing. In such situations, the system may prevent the elevator doors from closing and/or send a message immediately to the passenger that they have boarded the elevator car without their object(s).

Although described with respect to a passenger forgetting an object relative to an elevator car, embodiments may be applied to hotel rooms where a guest may forget objects outside a guest room. The system may detect the object and prompt the user with a message. Embodiments may be expanded to areas outside of guest rooms, including public areas where a guest can forget his belongings and then nearest camera will trigger an event to a guest based on his hotel mobile credentials. Such areas could include the hotel lobby, outside a guest room, at a gym or swimming pool, etc. Embodiments may also apply commercial domains, such as universities, where students can forget this accessories in classroom or lab or a conference hall. In general, embodiments may monitor an area for an object forgotten by a user.

As described above, embodiments can be in the form of processor-implemented processes and devices for practicing those processes, such as a controller 210. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method for notifying a passenger of an object left in an elevator car, the method comprising:
determining if the passenger is authorized to access an object tracking service;
when the passenger is authorized to access the object tracking service, using an imaging device to match the passenger to an object;
determining that the passenger has exited the elevator car; and
when the passenger has exited the elevator car without taking the object, generating a notification.

2. The method of claim 1, wherein determining if the passenger is authorized to access the object tracking service comprises detecting a credential.

3. The method of claim 2, wherein determining if the passenger is authorized to access the object tracking service comprises verifying the credential.

4. The method of any preceding claim, wherein matching the passenger to the object comprises processing images of the passenger and the object.

5. The method of any preceding claim, wherein determining that the passenger has exited the elevator car comprises processing images of the passenger.

6. The method of any preceding claim, wherein determining the passenger has exited the elevator car without taking the object comprises processing images of the inside of the elevator car.

7. A notification system comprising:
a controller configured to perform operations including:
determining if a passenger is authorized to access an object tracking service;
when the passenger is authorized to access the object tracking service, using the imaging device to match the passenger to an object;
determining that the passenger has exited an elevator car; and
when the passenger has exited the elevator car without taking the object, generating a notification.

8. The notification system of claim 7, wherein determining if the passenger is authorized to access the object tracking service comprises detecting a passenger credential, and optionally further comprises the controller verifying the credential.

9. The notification system of claim 8, further comprising a fixture, the fixture detecting the presence of the credential.

10. The notification system of claim 9, wherein the fixture is located outside the elevator car or inside the elevator car.

11. The notification system of any of claims 7 to 10, wherein the imaging device is located outside the elevator car or inside the elevator car.

12. The notification system of any of claims 7 to 11, wherein matching the passenger to the object comprises processing images of the passenger and the object.

13. The notification system of any of claims 7 to 12, wherein determining that the passenger has exited the elevator car comprises processing images of the passenger.

14. The notification system of any of claims 7 to 13, wherein determining the passenger has exited the elevator car without taking the object comprises processing images of the inside of the elevator car.

15. A method for notifying a user of an object left in an area, the method comprising:
determining if the user is authorized to access an object tracking service;
when the user is authorized to access the object tracking service, using an imaging device to match the user to an object;
determining that the user has exited the area; and
when the user has exited the area without taking the object, generating a notification.
